# EUROPÄISCHE PATENTSCHRIFT

(11) **EP 3 003 765 B1**
(45) Veröffentlichungstag und Bekanntmachung des Hinweises auf die Patenterteilung: **27.09.2017**
(21) Anmeldenummer: 14729215.5
(22) Anmeldetag: 03.06.2014
(51) Int. Cl.: B60K 17/342

(54) **ANTRIEBSVORRICHTUNG FÜR ALLRADGETRIEBENE KRAFTFAHRZEUGE**
DRIVE DEVICE FOR FOUR-WHEEL-DRIVE MOTOR VEHICLES
DISPOSITIF D'ENTRAÎNEMENT POUR VÉHICULES AUTOMOBILES À QUATRE ROUES MOTRICES

(30) Priorität: 07.06.2013 DE 102013009542
(43) Veröffentlichungstag der Anmeldung: 13.04.2016
(73) Patentinhaber: Audi AG, 85045 Ingolstadt (DE)
(72) Erfinder: MEIXNER, Christian, 85049 Ingolstadt (DE)
(74) Vertreter: Lehle, Josef
(86) Internationale Anmeldenummer: PCT/EP2014/001494
(87) Internationale Veröffentlichungsnummer: WO 2014/195010

(56) Entgegenhaltungen:
- WO-A1-81/03150
- WO-A1-93/05974
- FR-A- 1 367 891
- GB-A- 295 820
- US-A- 2 659 246
- US-A1- 2002 108 799

## Beschreibung

Die vorliegende Erfindung betrifft ein allradgetriebene Kraftfahrzeug gemäß dem Oberbegriff des Patentanspruchs 1.
Allradantriebe für Kraftfahrzeuge, insbesondere Personenkraftfahrzeuge, lassen sich grob unterteilen in permanente Antriebe mit zwei Achsdifferenzialen und einem Mittendifferenzial (zur Vermeidung von Antriebsverspannungen) und in sogenannte Hang-on Antriebe mit einer unmittelbar von dem Antriebsaggregat angetriebenen Primärachse und einer über eine Kupplung (zum Beispiel eine Viscokupplung oder eine Haldexkupplung) bei Antriebsschlupf zuschaltbaren Sekundärachse. Die Primärachse bzw. die Sekundärachse können dabei die Vorderachse oder die Hinterachse des Kraftfahrzeugs sein.

Durch die JP 2005 035 379 A1 ist eine Antriebsvorrichtung bekannt, bei der der Antrieb der Sekundärachse des Kraftfahrzeugs über einen Zahnriementrieb als Übertragungsmittel von der Primärachse zur Sekundärachse erfolgt. Die Differenziale der beiden Achsen sind in üblicher Weise koaxial zu den auf die Räder abtreibenden Antriebswellen angeordnet. Ferner ist eine steuerbare Kupplung vorgesehen, über die der Kraftfluss zur Sekundärachse zur Erzielung zum Beispiel nur eines Frontantriebs des Kraftfahrzeugs unterbrechbar ist.

Aus der WO 81/03150 ist zudem eine Antriebsvorrichtung bekannt, bei der eine Sekundärachse über zwei seitliche Umschlingungstriebe von der über ein Antriebsaggregat angetriebenen Primärachse des Kraftfahrzeugs bzw. deren auf die Räder abtreibenden Antriebswellen beaufschlagt ist. Ein Differenzial ist nur an der Primärachse vorgesehen, wodurch Drehzahlunterschiede der Räder insbesondere beim Durchfahren von Kurven nicht zufriedenstellend ausgleichbar sind.

Ein gattungsbildendes Fahrzeug ist aus GB 295 820 A bekannt.

Aufgabe der Erfindung ist es, ein Fahrzeug der gattungsgemäßen Art anzugeben, wobei die Antriebsvorrichtung baulich besonders kompakt ausgeführt ist und die größere, konstruktive Freiheitsgrade in deren Anordnung in einem Kraftfahrzeug bietet.

Die Lösung dieser Aufgabe gelingt mit den Merkmalen des Patentanspruchs 1. Vorteilhafte Weiterbildungen und Ausgestaltungen der Erfindung sind Gegenstand der Unteransprüche.

Erfindungsgemäß wird vorgeschlagen, dass koaxial zu einem Mittendifferenzial der Primärachse an dessen Abtriebselementen Seitendifferenziale angeordnet sind, deren Antriebselemente mit den Abtriebselementen des Mittendifferenzials und deren Abtriebselemente mit den Antriebswellen der Primärachse und über mehrere, insbesondere zwei, separate Umschlingungstriebe mit den Antriebswellen der Sekundärachse trieblich verbunden sind. Ein wesentlicher Vorteil ist dabei darin zu sehen, dass das Mittendifferenzial und die beiden Seitendifferenziale kompakt und baulich günstig mit gemeinsamer Drehachse, sowie gegebenenfalls unmittelbar axial einander benachbart angeordnet und über eine gemeinsame Schmiermittelquelle mit Schmieröl versorgt werden können. Die Ausgestaltung der Sekundärachse kann ohne integriertes Differenzial stark vereinfacht sein. Zudem ist eine durch die Übersetzungsauslegung der Seitendifferenziale vorgegebene Momentenverteilung auf die angetriebenen Räder des Kraftfahrzeugs bei einem zuverlässigen Ausgleich von Drehzahldifferenzen sichergestellt.

Besonders bevorzugt können dabei das Mittendifferenzial als baulich einfaches Kegelraddifferenzial und die Seitendifferenziale als in axialer Richtung kurz bauende Planetengetriebe ausgeführt sein. Gegebenenfalls könnten aber alle drei Differenziale durch Planetengetriebe gebildet sein.

Eine fertigungstechnisch einfache und günstige Wirkungsgrade aufweisende Konstruktion wird dadurch erzielt, dass die Antriebselemente der Seitendifferenziale die Planetenräder tragenden Stege der Planetengetriebe und die Abtriebselemente die Sonnenräder und die Hohlräder sind.

Die Umschlingungstriebe könnten beispielsweise Kettentriebe sein. Bevorzugt werden jedoch Zahnriementriebe vorgeschlagen, die bei größeren Übertragungsstrecken mehrteilig mit Zwischenrädern, Umlenkrädern, etc. in den Triebgehäusen zur Stabilisierung und Anpassung an gegebene Bauraumverhältnisse ausgeführt sein können. Gemäss Erfindung ist der Antriebsaggregat quer eingebaut, zumindest das Mittendifferenzial in ein Aggregatsgehäuse integriert ist und die Seitendifferentiale axial benachbart angebaut sind. Das Antriebsaggregat kann dabei frontseitig oder heckseitig des Kraftfahrzeugs angeordnet sein, wobei die über die Zahnriementriebe angetriebene Sekundärachse dann entweder die Hinterachse oder die gelenkte Vorderachse bildet.

Drei Ausführungsbeispiele der Erfindung sind im Folgenden anhand der beigefügten, schematischen Zeichnung näher erläutert.

Es zeigen:
- Fig. 1: ein Blockschaltbild einer Antriebsvorrichtung für allradgetriebene Kraftfahrzeuge, mit einem quer eingebauten Antriebsaggregat, einer drei koaxiale Differenziale aufweisenden Primärachse und einer über Zahnriementriebe angetriebenen Sekundärachse;
- Fig. 2: ebenfalls als Blockschaltbild eine Antriebsvorrichtung, die nicht zur Erfindung gehört, mit Längseinbau des Antriebsaggregats und einer die drei Differenziale in einem Achsgehäuse aufweisenden Primärachse, die wiederum über zwei seitliche Zahnriementriebe die vorne positionierte Sekundärachse antreibt; und
- Fig. 3: eine Antriebsvorrichtung mit längs eingebautem Antriebsaggregat, die nicht zur Erfindung gehört, an das seitlich das Mittendifferenzial angebaut ist, das über AbtriebsHalbwellen an die beiderseits des Antriebsaggregats angeordneten Seitendifferenziale angekoppelt ist.

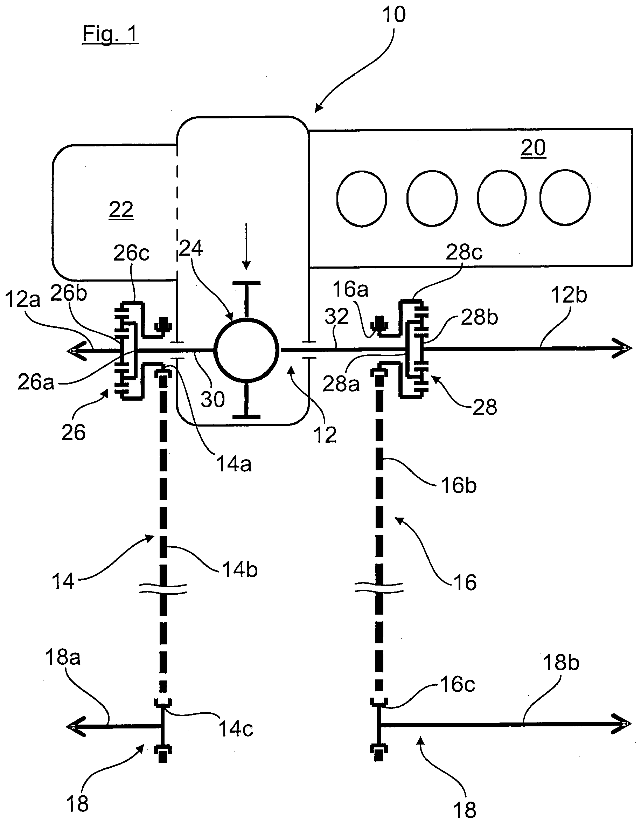

In der Fig. 1 ist grob schematisch eine Antriebsvorrichtung für ein allradgetriebenes Kraftfahrzeug mit einem frontseitig quer eingebauten Antriebsaggregat 10 dargestellt, das eine Vorderachse bzw. Primärachse 12 und über diese durch Übertragungsmittel bzw. zwei Zahnriementriebe 14, 16 eine Hinterachse bzw. Sekundärachse 18 des Kraftfahrzeugs antreibt.

Das Antriebsaggregat 10 setzt sich im Wesentlichen aus einer Brennkraftmaschine 20 (dies könnte auch eine andere Antriebsmaschine, zum Beispiel eine Elektromaschine sein), einem Geschwindigkeits-Wechselgetriebe 22 und einem integrierten Kegelrad-Mittendifferenzial 24 zusammen. Das Mittendifferenzial 24 bekannter Bauart bekannter Weise treibt über als Planetengetriebe ausgeführte Seitendifferenziale 26, 28 die Vorderräder (nicht dargestellt) der Primärachse 12 des Kraftfahrzeugs über Antriebswellen 12a, 12b an.

Das über das Wechselgetriebe 22 angetriebene Mittendifferenzial 24 treibt dabei mit seinen Halbwellen 30, 32 die koaxialen Seitendifferenziale 26, 28 an, wobei die Antriebselemente der Planetengetriebe jeweils der die Planetenräder tragende Steg 26a, 28a ist.

Die Abtriebselemente der Planetengetriebe 26, 28 sind die Sonnenräder 26b, 28b, die mit den Antriebswellen 12a, 12b der Primärachse 12 gekoppelt sind und ferner die Hohlräder 26c, 28c, die mit den antreibenden Riemenrädern 14a, 16a der Zahnriementriebe verbunden sind.

Die Zahnriemen 14b, 16b treiben über Riemenräder 14c, 16c auf der Sekundärachse 18 bzw. über beidseitige Antriebswellen 18a, 18b die Hinterräder des Kraftfahrzeugs an.

Die Zahnriementriebe 14, 16, die an das Antriebsaggregat 10 angebauten Seitendifferenziale 26, 28 und die Antriebswellen 18a, 18b mit den Riemenrädern 14c, 16c der Sekundärachse 18 sind in entsprechenden Gehäusen (nicht dargestellt) drehbar gelagert bzw. angeordnet.

Durch die Zuordnung der Seitendifferenziale 26, 28 zu dem Mittendifferenzial 24 treibt dieses über die Halbwellen 30, 32 die Seitendifferenziale an, die dann je nach Übersetzungsauslegung des Antriebsmoment zum Beispiel 50:50 oder 60:40 auf die Antriebswellen 12a, 12b bzw. die Vorderräder und über die Zahnriementriebe 14, 16 auf die Antriebswellen 18a, 18b der Hinterräder des Kraftfahrzeugs verteilen.

Auftretende Drehzahldifferenzen zwischen der Primärachse 12 und der Sekundärachse 18 werden demzufolge über die Seitendifferenziale 26, 28 und Drehzahldifferenzen zwischen den gleichseitigen Rädern des Kraftfahrzeuges über das Mittendifferenzial 24 ausgeglichen.

Es sei bemerkt, dass die Primärachse 12 und die Sekundärachse 18 abhängig von der Einbausituation des Antriebsaggregats 10 (Front- oder Heckeinbau) die Vorderachse bzw. die Hinterachse des Kraftfahrzeugs sein kann.

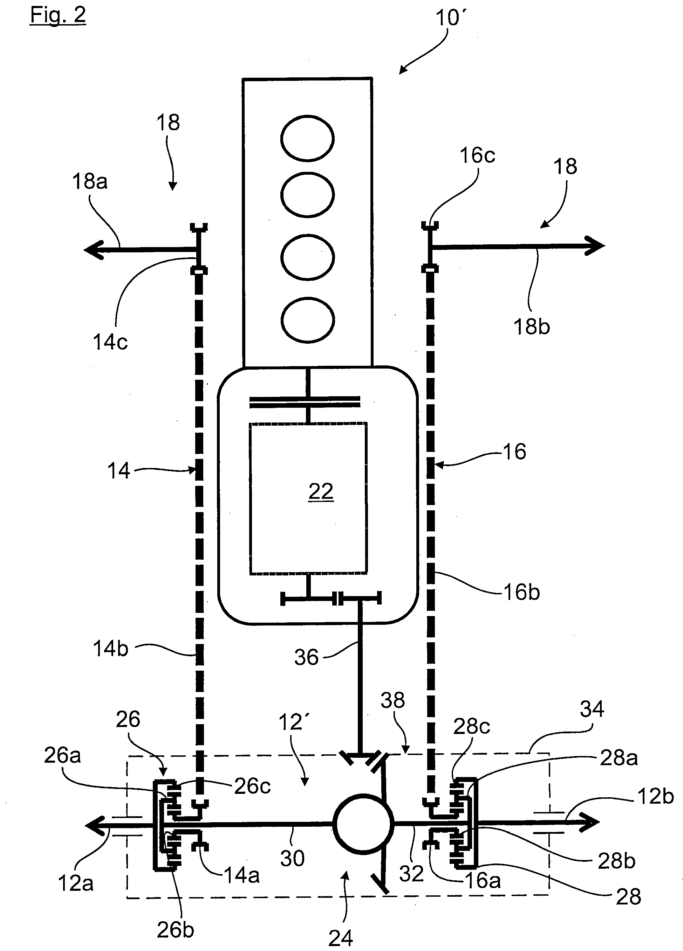

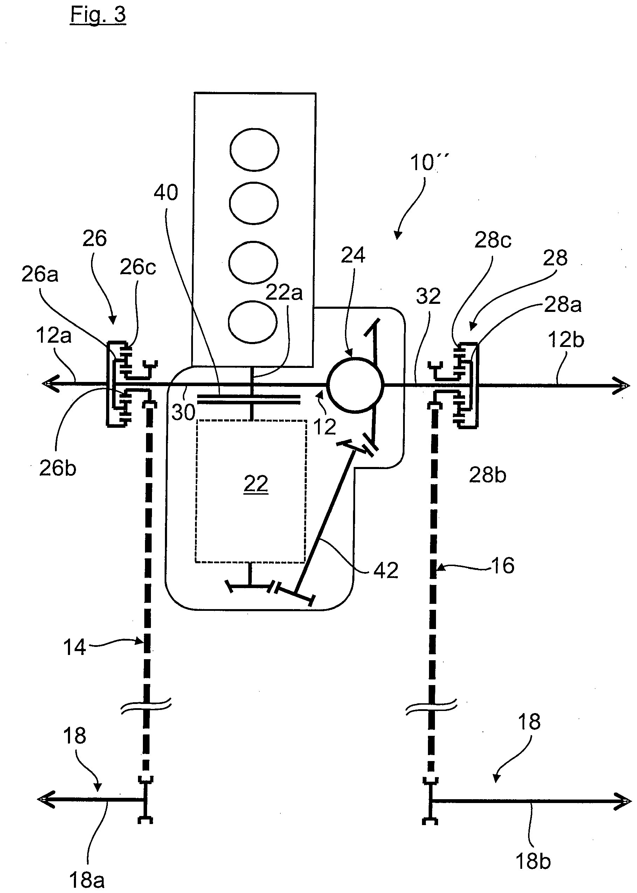

Die Fig. 2 und 3 zeigen alternative Antriebsvorrichtungen, die nur soweit beschrieben sind, als sie sich wesentlich von der Fig. 1 unterscheiden. Funktionell gleiche Teile sind mit gleichen Bezugszeichen versehen.

Gemäß Fig. 2 ist das Antriebsaggregat 10' längs und frontseitig in das Kraftfahrzeug eingebaut.

Das Mittendifferenzial 24 und die Seitendifferenziale 26, 28 sind koaxial in einem gemeinsamen Achsgehäuse 34 (gestrichelt angedeutet) angeordnet, das die Primärachse 12' bildet, wobei die Halbwellen 30, 32 des Mittendifferenziales 24 wie vorstehend beschrieben die Seitendifferenziale 26, 28 antreiben.

Das Wechselgetriebe 22 des Antriebsaggregats 10' treibt über eine Abtriebswelle 36 das Tellerrad des Mittendifferenzials 24 über einen Kegeltrieb 38 an. Die Abtriebswelle 36 kann zum Beispiel eine Kardanwelle sein.

Die Seitendifferenziale 26, 28 treiben über die Sonnenräder 26b, 28b die Antriebswellen 12a, 12b der Primärachse 12 bzw. der Hinterräder des Kraftfahrzeugs an, während die Hohlräder 26c, 28c über die Riemenräder 14a, 16a, die Zahnriemen 14b, 16b und die Riemenräder 14c, 16c bzw. über die seitlich an dem Antriebsaggregat 10' vorbei nach vorne geführten Zahnriementriebe 14, 16 und die Antriebswellen 18a, 18b die Sekundärachse 18 bzw. die Vorderräder des Kraftfahrzeugs beaufschlagen.

Die Fig. 3 zeigt eine noch weitere, alternative Antriebsvorrichtung, bei der das wiederum frontseitig und längs eingebaute Antriebsaggregat 10" des Kraftfahrzeugs ein seitlich im Bereich der Anfahrkupplung 40 angebautes Mittendifferenzial 24 der Primärachse 12 aufweist, das in an sich bekannter Weise über eine nach vorne rückgeführte Abtriebswelle 42 des Wechselgetriebes 22 angetrieben ist.

Das Mittendifferenzial 24 treibt über die eine Halbwelle 32 und das Seitendifferenzial 28 das rechte Vorderrad und über den Zahnriementrieb 16 das Hinterrad des Kraftfahrzeugs an, während die axial längere Halbwelle 30 die Getriebe-Eingangswelle 22a des Wechselgetriebes 22 querend das linksseitige Seitendifferenzial 26 und dieses wie vorbeschrieben die Antriebswelle 12a des linken Vorderrads des Kraftfahrzeugs und über den Zahnriementrieb 14 das linke Hinterrad der Sekundärachse 18 antreibt.

Wie ersichtlich ist, ist das rechte Seitendifferenzial 28 an das in das Getriebegehäuse des Wechselgetriebes 22 integrierte Kegelrad-Mittendifferenzial 24 unmittelbar angebaut, während das linke Seitendifferenzial 26 und der korrespondierende Zahnriementrieb 14 am Antriebsaggregat 10" vorbei nach hinten geführt sind.

Die Erfindung ist nicht auf die beschriebenen Ausführungsbeispiele beschränkt. Insbesondere kann eine jede Antriebsvorrichtung der Fig. 1 bis 3 sowohl frontseitig als auch heckseitig des Kraftfahrzeugs eingebaut sein, wobei die Primärachse 12 (unmittelbar angetrieben) die Vorderachse oder die Hinterachse sein kann; gleiches gilt für die über den Umschlingungstrieb 14, 16 mittelbar angetriebene Sekundärachse 18.

Das Kegelrad-Mittendifferenzial 24 könnte gegebenenfalls auch als Planetengetriebe bekannter Bauart ausgeführt sein.

Ferner könnten an den Riemenrädern 14a, 16a, 14c, 16c Übersetzungsgetriebe (nicht dargestellt) vorgesehen sein, die am antreibenden Riemenrad 14a, 16a eine Übersetzung ins Schnelle (Zugkraftabsenkung) und am abtreibenden Riemenrad 14c, 16c eine Übersetzung ins Langsame (Drehmomenterhöhung) bewirken, bzw. die wieder eine Drehzahlgleichstellung an den Antriebswellen 12a, 12b zu 18a, 18b herstellen.

## Patentansprüche

1. Allradgetriebene Kraftfahrzeug mit eine Antriebsvorrichtung, mit einer von einem Antriebsaggregat über ein Differenzial angetriebenen Primärachse und einer über die Primärachse und Übertragungsmittel angetriebenen Sekundärachse, wobei koaxial zu einem Mittendifferenzial (24) der Primärachse (12) an deren Abtriebselementen (30, 32) Seitendifferenziale (26, 28) angeordnet sind, deren Antriebselemente (26a, 28a) mit den Abtriebselementen (30, 32) des Mittendifferenzials (24) und deren Abtriebselemente (26b, 26c, 28b, 28c) mit den Antriebswellen (12a, 12b) der Primärachse (12) und über mehrere, insbesondere zwei, separate Umschlingungstriebe (14, 16) mit den Antriebswellen (18a, 18b) der Sekundärachse (18) trieblich verbunden sind, **dadurch gekennzeichnet, dass** der Antriebsaggregat Quer eingebaut ist, dass zumindest das Mittendifferenzial (24) in ein Aggregatgehäuse integriert und die Seitendifferenziale (26, 28) axial benachbart angebaut sind.

2. Allradgetriebene Kraftfahrzeug nach Anspruch 1, **dadurch gekennzeichnet, dass** das Mittendifferenzial (24) als Kegelraddifferenzial und die Seitendifferenziale (26, 28) als Planetengetriebe ausgeführt sind.

3. Allradgetriebene Kraftfahrzeug nach Anspruch 1 oder 2, **dadurch gekennzeichnet, dass** die Antriebselemente der Seitendifferenziale (26, 28) durch die Planetenräder tragenden Stege (26a, 28a) der Planetengetriebe und die Abtriebselemente durch Sonnenräder (26b, 28b) und durch Hohlräder (26c, 28c) gebildet sind.

4. Allradgetriebene Kraftfahrzeug nach einem der vorhergehenden Ansprüche, **dadurch gekennzeichnet, dass** die Umschlingungstriebe ein- oder mehrteilige Zahnriementriebe (14, 16) sind.

## Claims

1. Four-wheel-drive motor vehicle having a drive device, comprising a primary axle which is driven by a drive assembly via a differential and comprising a secondary axle which is driven via the primary axle and via transmission means, wherein side differentials (26, 28) are arranged coaxial to a centre differential (24) of the primary axle (12), on the output elements (30, 32) thereof, and the input elements (26a, 28a) of the side differentials have a drive connection to the output elements (30, 32) of the centre differential (24), and the output elements (26b, 26c, 28b, 28c) of the side differentials have a drive connection to the drive shafts (12a, 12b) of the primary axle (12) and, via multiple, in particular two, separate belt drives (14, 16), to the drive shafts (18a, 18b) of the secondary axle (18), **characterised in that** the drive assembly is installed transversely, and **in that** at least the centre differential (24) is integrated in an assembly housing and the side differentials (26, 28) are fitted in an axially adjacent manner.

2. Four-wheel-drive motor vehicle according to claim 1, **characterised in that** the centre differential (24) is configured as a bevel-gear differential and the side differentials (26, 28) are configured as planetary transmissions.

3. Four-wheel-drive motor vehicle according to claim 1 or 2, **characterised in that** the input elements of the side differentials (26, 28) are formed by the arms (26a, 28a) of the planetary transmission that carry planet gears, and the output elements are formed by sun gears (26b, 28b) and by ring gears (26c, 28c).

4. Four-wheel-drive motor vehicle according to any one of the previous claims, **characterised in that** the belt drives are one-part or multi-part toothed belt drives (14, 16).

## Revendications

1. Véhicule automobile à quatre roues motrices avec un dispositif d'entraînement avec un essieu primaire entraîné par un groupe d'entraînement par l'intermédiaire d'un différentiel et un essieu secondaire entraîné par l'intermédiaire de l'essieu primaire et de moyens de transmission, dans lequel sont disposés, de manière coaxiale par rapport à un différentiel central (24) de l'essieu primaire (12), au niveau de ses éléments de sortie (30, 32), des différentiels latéraux (26, 28), dont les éléments d'entraînement (26a, 28a) sont reliés en fonctionnement aux éléments de sortie (30, 32) du différentiel central (24) et les éléments de sortie (26b, 26c, 28b, 28c), aux arbres d'entraînement (12a, 12b) de l'essieu primaire (12) et aux arbres d'entraînement (18a, 18b) de l'essieu secondaire (18) par l'intermédiaire de plusieurs, en particulier de deux, transmissions à enroulement (14, 16) séparées, **caractérisé en ce que** le groupe d'entraînement est monté de manière transversale, qu'au moins le différentiel central (24) est intégré dans un carter de groupe et les différentiels latéraux (26, 28) sont installés de manière axialement adjacente.

2. Véhicule automobile à quatre roues motrices, selon la revendication 1, **caractérisé en ce que**
le différentiel central (24) est réalisé sous la forme d'un différentiel à pignons coniques et les différentiels latéraux (26, 28), sous la forme d'engrenages planétaires.

3. Véhicule à quatre roues motrices selon la revendication 1 ou 2, **caractérisé en ce**
**que** les éléments d'entraînement des différentiels latéraux (26, 28) sont formés par des entretoises (26a, 28a), supportant les pignons satellites, de l'engrenage planétaire et les éléments de sortie, par des roues solaires (26b, 28b) et par des couronnes de train planétaire (26c, 28c).

4. Véhicule à quatre roues motrices, selon l'une quelconque des revendications précédentes,
**caractérisé en ce que** les transmissions à enroulement sont des transmissions à courroies dentées (14, 16) en une ou en plusieurs parties.
